Europäisches Patentamt

European Patent Office

Office européen des brevets

(11) Veröffentlichungsnummer: **0 293 741 B1**

(12) # EUROPÄISCHE PATENTSCHRIFT

(45) Veröffentlichungstag der Patentschrift: **07.01.93**

(51) Int. Cl.5: **G11B 7/24**

(21) Anmeldenummer: **88108358.8**

(22) Anmeldetag: **26.05.88**

(54) **Flächenförmiges, mehrschichtiges, laseroptisches Aufzeichnungsmaterial.**

(30) Priorität: **03.06.87 DE 3718523**

(43) Veröffentlichungstag der Anmeldung:
**07.12.88 Patentblatt 88/49**

(45) Bekanntmachung des Hinweises auf die Patenterteilung:
**07.01.93 Patentblatt 93/01**

(84) Benannte Vertragsstaaten:
**BE CH DE FR GB IT LI NL**

(56) Entgegenhaltungen:
**EP-A- 0 172 489**

**PATENT ABSTRACTS OF JAPAN vol. 11, no. 160 (M-592)(2607) 23 Mai 1987, & JP-A-61 293890**

(73) Patentinhaber: **BASF Aktiengesellschaft
Carl-Bosch-Strasse 38
W-6700 Ludwigshafen(DE)**

(72) Erfinder: **Koester, Eberhard, Dr.
Max-Slevogt-Strasse 23
W-6710 Frankenthal(DE)**
Erfinder: **Kuppelmaier, Harald
Kuehler Grund 30 a
W-6900 Heidelberg(DE)**
Erfinder: **Steininger, Helmut, Dr.
Dr.-Ernst-Kilb-Weg 15
W-6520 Worms 26(DE)**
Erfinder: **Wiegemann, Hans-Bertram, Dr.
Dr.-Hermann-Brunn-Strasse 16
W-6905 Schriesheim(DE)**

**Beschreibung**

Die Erfindung betrifft ein neues, in seinen anwendungstechnischen Eigenschaften verbessertes, flächenförmiges, laseroptisches Aufzeichnungsmaterial mit einem dimensionsstabilen Träger und einer dünnen, thermisch veränderbaren Aufzeichnungsschicht, welche aus Gold sowie mindestens einem weiteren Metall aus der Gruppe Ruthenium, Rhodium, Palladium, Silber, Kupfer, Osmium, Iridium und Platin besteht und die unter ihr liegende Oberfläche vollständig bedeckt. Ein solches Aufzeichnungsmaterial ist aus PATENT ABSTRACTS OF JAPAN, vol. 11, no. 160 (M-592)(2607), 23 May 1987, & JP-A-61-293 890 (HITACHI METALS LTD) 24.12.1986, bekannt.

Flächenförmige, mehrschichtige, laseroptische Aufzeichnungsmaterialien mit thermisch veränderbaren Aufzeichnungsschichten, welche beim Bestrahlen mit auf sie fokussierten Laserstrahlen in den Auftreffstellen ihre Reflektivität ändern, sind bekannt. Digitale Daten können darin mit Hilfe impulsmodulierter Schreiblaserstrahlen in Form thermisch veränderter Bereiche eingeschrieben werden. Dabei sind die Schreiblaserstrahlen auf die Aufzeichnungsschichten fokussiert und treffen senkrecht auf sie auf. Für das Einschreiben analoger Daten können auch Dauerstrich-Laser angewendet werden. Im Falle eingeschriebener digitaler Daten haben die thermisch veränderten Bereiche der Aufzeichnungsschichten eine runde oder elliptische Form, welche man auch als "spot" bezeichnet. Im Falle analoger Daten sind die thermisch veränderten Bereiche von beliebiger Form.

Für das Lesen der Daten verwendet man im allgemeinen kontinuierlich emittierte Leselaserstrahlen (Dauerstrich-Laserstrahlen), deren Energie nicht dazu ausreicht, weitere Veränderungen in den Aufzeichnungsschichten hervorzurufen. Die Leselaserstrahlen sind dabei gleichfalls auf die Aufzeichnungsschichten fokussiert und treffen senkrecht auf diese auf.

Beim Lesevorgang wird im allgemeinen das von den Aufzeichnungsschichten reflektierte Licht mit Hilfe geeigneter optischer Anordnungen erfaßt, üblichen und bekannten Detektoren zugeführt und durch geeignete elektronische Apparate in Signale umgewandelt.

Diese Schreib- und Leseverfahren sowie die entsprechenden hierfür geeigneten entsprechenden Aufzeichnungsmaterialien kennzeichnet man daher im allgemeinen mit dem Begriff "laseroptisch".

Im Falle mehrschichtiger, laseroptischer Datenplatten verwendet man im allgemeinen zum Schreiben und Lesen digitaler Daten die üblichen und bekannten Plattenlaufwerke. Ein solches Plattenlaufwerk enthält im wesentlichen einen Plattendrehteller und einen laseroptischen Schreib- und Lesekopf, dazu noch mechanische Servoeinrichtungen zur Korrektur der Spurlage, Autofokussiereinrichtungen, optische Elemente zur Analyse von Spurlagen- und Autofokusfehlern, Detektoreinrichtungen mit vorgeschalteten optischen Komponenten zur Erfassung des von den Datenplatten reflektierten Lichts des Leselaserstrahls sowie geeignete elektronische Bauteile. Üblicherweise enthält ein laseroptischer Schreib- und Lesekopf Laserdioden, welche Infrarotlicht emittieren und aus Halbleitermaterialien, wie z.B. GaAlAs, bestehen. Darüber hinaus weist ein solcher Schreib-und Lesekopf im allgemeinen noch weitere geeignete optische Bauteile wie dielektrische Strahlteiler, Polarisationsstrahlteiler oder polarisationsunabhängige Strahlteiler sowie eine $\lambda/4$- oder $\lambda/2$-Platte auf.

Flächenförmige, laseroptische Aufzeichnungsmaterialien mit Gold enthaltenden Aufzeichnungsschichten sind auch bereits bekannt.

So geht aus der US-A-4 576 895, Beispiel 8, ein Aufzeichnungsmaterial hervor, dessen Aufzeichnungsschicht durch dreizehnmal durchzuführendes, separates Aufdampfen von Gold und Tellurdioxid auf die Oberfläche eines Trägers hergestellt wird. Durch das Bestrahlen mit einem Laserstrahl erhöht sich die Reflektivität der aus 26 alternierenden Gold/Tellurdioxid-Lagen bestehenden Aufzeichnungsschicht in der Auftreffstelle von ursprünglich 35 % auf 55 %. Diese Änderung geht nicht auf Lochbildung oder Mikroschwellung zurück, sondern auf die Vergrößerung der durchschnittlichen Größe der Goldteilchen in der Auftreffstelle, was in der Patentschrift als "Fraktionierung" der ursprünglich "homogenen" Schicht bezeichnet wird. Außer Gold kommen für diese Art der Aufzeichnungsschichten auch noch die Metalle Silber, Platin oder Palladium in Betracht.

In der EP-A-98 045 wird ein Aufzeichnungsmaterial beschrieben, dessen ultradünne, diskontinuierliche Aufzeichnungsschicht aus scharf voneinander getrennten "Inseln" aus Gold, d.h. aus Goldkörnern, besteht. Diese Goldkörner haben einen mittleren Durchmesser, welcher erheblich kleiner ist als der Durchmesser eines auf sie fokussierten Laserstrahls. Beim Bestrahlen mit einem solchen Laserstrahl agglomerieren die Goldkörner in der Auftreffstelle, wodurch sich die Reflektivität der Aufzeichnungsschicht an dieser Stelle ändert.

Aus der EP-A-79 232 ist ein Aufzeichnungsmaterial bekannt, in dessen ultradünner, kontinuierlicher Aufzeichnungsschicht aus Gold beim Bestrahlen mit einem auf sie fokussierten Laserstrahl eine Erhöhung der Reflektivität in der Auftreffstelle eintritt. Diese Änderung der Reflektivität beruht nicht auf dem Schmelzen oder dem Verdampfen von Gold. Es wird die Vermutung ausgesprochen, spezielle Effekte, welche offenbar nur bei ultradünnen Goldschichten auftreten und deren Mechanismen letztlich nicht bekannt sind, seien für die Reflektivitätsänderung verantwortlich.

In der EP-A-33 046 wird ein Aufzeichnungsmaterial beschrieben, dessen dünne Aufzeichnungsschicht aus den Metallen Gold, Silber oder Platin mit einer Schicht aus einem organischen Material unterlegt ist. Beim Bestrahlen mit einem auf die Aufzeichnungsschicht fokussierten Laserstrahl wird die Schicht aus dem organischen Material gleichfalls erwärmt, wodurch sie sich in der Auftreffstelle ausdehnt und die Goldschicht irreversibel dehnt, ohne sie dabei zu zerreißen. Dadurch bildet sich in der Metallschicht eine Reliefstruktur, welche die eingeschriebenen Daten beinhaltet.

Aus der JP-A-125 001/53 geht ein Aufzeichnungsmaterial hervor, dessen Aufzeichnungsschicht aus einer 3 nm dicken Palladiumlage und einer 30 nm dicken Goldlage besteht. Dabei liegt die Palladiumlage der Trägeroberfläche direkt auf. Beim Bestrahlen der Aufzeichnungsschicht mit einem auf sie fokussierten Laserstrahl bilden sich in der Auftreffstelle Vertiefungen. Die Aufzeichnungsschicht kann auch aus mehr als zwei Lagen bestehen, wobei anstelle von Palladium auch die Metalle Silber, Kupfer, Platin, Rhodium, Iridium, Rhenium, Ruthenium und Osmium verwendet werden können.

Diese bekannten flächenförmigen, mehrschichtigen, laseroptischen Aufzeichnungsmaterialien weisen Nachteile auf.

So müssen die aus der EP-A-98 045 und der EP-A-79 232 bekannten Aufzeichnungsschichten mit zwei weiteren Schichten unterlegt werden, um eine erwünschte niedrige Grundreflektivität einzustellen. Dabei wird unter Grundreflektivität die Reflektivität der thermisch unveränderten Bereiche der Aufzeichnungsschichten verstanden. Bei einer dieser weiteren Schichten handelt es sich um eine Reflektionsschicht aus beispielsweise Aluminium, welche dem Träger unmittelbar aufliegt. Bei der anderen Schicht handelt es sich um eine lichtdurchlässige Schicht aus einem dielektrischen Material, welche der Reflektorschicht aufliegt und auch als "spacer" bezeichnet wird. Die gesamte Anordnung aus eigentlicher Aufzeichnungsschicht oder Absorberschicht, "spacer" und Reflektorschicht wird in der Patentschrift als "trilayer" bezeichnet. Bei der Herstellung solcher Aufzeichnungsmaterialien genügt es deshalb nicht, einzig und allein dem Eigenschaftsprofil der Aufzeichnungsschicht Beachtung zu schenken, sondern es müssen alle Schichten des "trilayer" im einzelnen aufeinander abgestimmt werden.

Weil sich die Aufzeichnungsschicht des aus der EP-A-33 046 bekannten Aufzeichnungsmaterials beim Schreibvorgang ausdehnt, ist es problematisch, sie mit Schutzschichten zu bedecken. Solche Schutzschichten sind aber von großem Vorteil, weil sie verhindern, daß Staubpartikel oder Kratzer im Material in dem Laserfokus zu liegen kommen und dadurch unerwünschte Streuungen hervorrufen.

Entsprechendes gilt für die Aufzeichnungsschichten der JP-A-125 001/53, in welche die Daten in Form von Vertiefungen eingeschrieben werden. Überdies erfordert ein solches Schreibverfahren eine vergleichsweise hohe Lichtleistung, so daß die Aufzeichnungsschichten nur wenig empfindlich sind.

Da die Aufzeichnungsschichten der US-A-4 576 895 aus alternierenden Gold- und Oxidschichten bestehen, treten hier verstärkt Haftungsmängel und innere Spannungen im Material auf, was die Lebensdauer der Aufzeichnungsschichten verringert. Überdies weisen solche Aufzeichnungsschichten eine hohe Grundreflektivität auf, was dem Signal-Rausch-Verhältnis abträglich ist.

Insgesamt lassen die bekannten Aufzeichnungsmaterialien hinsichtlich ihrer Herstellung, ihrer Empfindlichkeit und ihrem Signal-Rausch-Verhältnis noch immer zu wünschen übrig und genügen noch nicht den hohen Anforderungen der Praxis.

Aufgabe der vorliegenden Erfindung war es daher, ein neues, flächenförmiges, mehrschichtiges, laseroptisches Aufzeichnungsmaterial mit einem dimensionsstabilen Träger und einer dünnen, thermisch veränderbaren, aus Gold sowie mindestens einem der Metalle Ruthenium, Rhodium, Palladium, Silber, Kupfer, Rhenium, Osmium, Iridium und Platin bestehenden Aufzeichnungsschicht aufzuzeigen, welches die Nachteile des Standes der Technik nicht mehr länger aufweist.

Demgemäß wurde ein flächenförmiges, laseroptisches Aufzeichnungsmaterial mit einem dimensionsstabilen Träger und einer dünnen, thermisch veränderbaren Aufzeichnungsschicht, welche aus Gold sowie mindestens einem der Metalle Ruthenium, Rhodium, Palladium, Silber, Kupfer, Osmium, Iridium und Platin besteht und die unter ihr liegende Schicht vollständig bedeckt, gefunden, welches dadurch gekennzeichnet ist, daß

a) seine Aufzeichnungsschicht außerdem noch aus Rhenium bestehen kann und

b) bezogen auf ihre Gesamtmenge, 15 bis 85 Gew.% Gold enthält, welches überwiegend unlegiert als separate Phase vorliegt,

c) eine Oberflächenkörnung mit einem mittleren Korndurchmesser von 10 bis 200 nm aufweist,

d) eine mittlere Schichtdicke $\bar{d}$ von 5 bis 300 nm hat, wobei $\bar{d}$ definiert ist als

$$\overline{d} = \frac{\overline{d}_{min} + \overline{d}_{max}}{2}$$

worin $\overline{d}_{min}$ die mittlere Dicke von 10 der dünnsten Stellen und $\overline{d}_{max}$ die mittlere Dicke von 10 der stärksten Stellen der Aufzeichnungsschicht bedeutet,
und

e) durch mindestens zweimal durchzuführendes, separates Beschichten der Oberfläche des Trägers oder der Oberfläche einer dem Träger aufliegenden Schicht mit Gold und mit mindestens einem der anderen genannten Metalle in alternierender Folge herstellbar ist.

Dabei umfaßt der Begriff "flächenförmig" alle Raumformen, deren Dicke erheblich kleiner ist als ihre Länge und Breite. Demnach kann es sich hier um band-, platten- oder scheibenförmige Aufzeichnungsmaterialien handeln, wobei die scheibenförmigen im allgemeinen auch als Datenplatten bezeichnet werden.

Wesentlicher Bestandteil des erfindungsgemäßen Aufzeichnungsmaterials ist seine Aufzeichnungsschicht.

Die Aufzeichnungsschicht bedeckt die unmittelbar unter ihr liegende Schicht vollständig und besteht nicht aus scharf voneinander getrennten "Inseln" oder Körnern. Bei der unter der Aufzeichnungsschicht liegenden Schicht kann es sich um den dimensionsstabilen Träger selbst oder um Schichten aus lichtdurchlässigen oder -undurchlässigen organischen oder anorganischen Stoffen handeln.

Die Aufzeichnungsschicht besteht aus Gold sowie mindestens einem weiteren Metall aus der Gruppe Ruthenium, Rhodium, Palladium, Silber, Kupfer, Rhenium, Osmium, Iridium und Platin. Hierbei sind Aufzeichnungsschichten aus Gold sowie aus mindestens einem der Metalle Osmium, Iridium, Palladium und Platin von Vorteil. Von besonderem Vorteil sind Aufzeichnungsschichten aus Gold sowie aus einem dieser Metalle. Von ganz besonderem Vorteil sind Aufzeichnungsschichten aus Gold und Platin.

Die Aufzeichnungsschichten enthalten, bezogen auf ihre Gesamtmenge, 15 bis 85 Gew.% an Gold. Bei geringeren Goldmengen nehmen die Reflektivität und die Empfindlichkeit der Aufzeichnungsschichten deutlich ab, so daß sie zum einen nicht mehr länger mit geringer Laserlichtleistung beschrieben werden können, und zum anderen können die Spurlagenservo- und Autofokussiereinrichtungen wegen der geringeren Grundreflektivität ihre Funktion nicht mehr einwandfrei erfüllen. Mit höheren Goldmengen läßt sich die besondere äußere Gestalt der Aufzeichnungsschicht nicht mehr einwandfrei reproduzieren. Bevorzugt wird ein Goldgehalt von 30 bis 75 Gew.%, weil sich hiermit das besondere, vorteilhafte Eigenschaftsprofil der Aufzeichnungsschicht in besonders einfacher Weise einstellen läßt.

Die überwiegende Menge des Goldes liegt in der Aufzeichnungsschicht unlegiert als separate Phase vor. Unter "überwiegend" ist dabei ein Anteil von mehr als 55 %, vorzugsweise mehr als 60 % und insbesondere mehr als 75 % des vorhandenen Goldes zu verstehen. Diese Goldmenge liegt in ebenen, gefalteten oder geknickten separaten Lagen und/oder als in der Matrix der Aufzeichnungsschicht eingebettete feine Partikel beliebiger äußerer Form vor. Dabei ist die Größe solcher Partikel erheblich kleiner als der Durchmesser des Fokus eines auf sie fokussierten Laserstrahls.

Die Aufzeichnungsschicht weist eine strukturierte Oberfläche auf. Diese Strukturierung hat die Form von eng aneinander liegenden Körnern, welche aus der Aufzeichnungsschicht herausragen und durch mehr oder weniger enge Einschnitte voneinander getrennt sind. Der mittlere Durchmesser der Körner in dieser Oberflächenkörnung liegt bei 10 bis 200 nm, vorteilhafterweise bei 50 bis 160 nm und insbesondere bei 80 bis 150 nm.

Bedingt durch die Körnung der Oberfläche der Aufzeichnungsschicht läßt sich für diese lediglich eine mittlere Schichtdicke $\overline{d}$ angeben, welche als

$$\overline{d} = \frac{\overline{d}_{min} + \overline{d}_{max}}{2}$$

definiert ist. Hierbei bedeutet $\overline{d}_{min}$ die mittlere Dicke der dünnsten Stellen in der Aufzeichnungsschicht. Diese Stellen liegen in den Einschnitten zwischen den Körnern. Für die Ermittlung des Wertes von $\overline{d}_{min}$ wird die Dicke von 10 solcher Stellen gemessen, und die erhaltenen Werte werden gemittelt. $\overline{d}_{max}$ bedeutet die mittlere Dicke der stärksten Stellen in der Aufzeichnungsschicht. Diese liegen in der Mitte der Körner, welche aus der Aufzeichnungsschicht herausragen. Für die Ermittlung des Wertes von $\overline{d}_{max}$ mißt man die Dicke von 10 solcher Stellen und mittelt die erhaltenen Werte. Die in dieser Weise bestimmte mittlere Schichtdicke $\overline{d}$ liegt im Bereich von 5 bis 300 nm, vorteilhafterweise von 10 bis 200 nm und insbesondere von 20 bis 150 nm. Dabei können sich $\overline{d}_{min}$ und $\overline{d}_{max}$ erheblich, d.h. bis zu drei Größenordnungen, voneinander unterscheiden. Dies bedeutet zum einen, daß die Körner vergleichsweise große Durchmesser aufweisen, wohingegen die Dicke der Aufzeichnungsschicht in den Einschnitten vergleichsweise gering ist. Zum anderen können vergleichsweise feine Körner aus einer dicken Aufzeichnungsschicht herausragen, d.h. die Materialdicke in den Einschnitten ist hoch. Es ist von Vorteil, wenn sich $\overline{d}_{min}$ und $\overline{d}_{max}$ um etwa zwei Größenordnungen voneinander unterscheiden.

Die Aufzeichnungsschicht ist herstellbar durch mindestens zweimaliges Beschichten der Oberfläche des Trägers oder der Oberfläche einer dem Träger aufliegenden Schicht mit Gold und mindestens einem weiteren der vorstehend genannten anderen Metalle in alternierender Folge.

Hierbei scheidet man in einem ersten Beschichtungsschritt beispielsweise Gold separat auf der betreffenden Oberfläche ab, um anschließend - nach Beendigung dieses ersten Beschichtungsschrittes - in einem zweiten separaten Beschichtungsschritt eines der vorstehend genannten anderen Metalle aufzubringen. Hiernach werden die beiden separaten Beschichtungsschritte in gleicher Abfolge mindestens noch einmal wiederholt, d.h. sie werden mindestens zweimal durchgeführt.

Dabei ergibt sich die Untermenge des Goldes oder eines der genannten Metalle, welche in einem einzelnen separaten Beschichtungsschritt abgeschieden wird, unmittelbar aus der hierbei angewendeten Metallabscheidungsrate und der Beschichtungszeit. Die Gesamtmenge des Goldes oder eines der genannten Metalle in der Aufzeichnungsschicht ist dann gleich der Summe der betreffenden Untermengen. Hierbei kann eine Gesamtmenge aus Gold oder aus einem der genannten Metalle aus Untermengen aufgebaut werden, welche sich erheblich voneinander unterscheiden. Es ist indes von Vorteil, wenn eine solche Gesamtmenge aus in etwa gleichen Untermengen aufgebaut wird, was bedeutet, daß bei der Herstellung der Aufzeichnungsschicht während der einzelnen separaten Beschichtungsschritte jeweils in etwa gleiche Untermengen von Gold oder von mindestens einem der genannten Metalle abzuscheiden sind.

Das Verhältnis der einzelnen Untermengen von Gold zu den einzelnen Untermengen von mindestens einem der genannten Metalle kann breit variieren und richtet sich u.a. nach dem Verhältnis der betreffenden Gesamtmengen. Werden bei der Herstellung der Aufzeichnungsschichten während der einzelnen separaten Beschichtungsschritte jeweils in etwa gleiche Untermengen aufgebracht, so richtet sich das Verhältnis der Untermengen von Gold und der Untermengen von mindestens einem der genannten Metalle in der Hauptsache nach dem Verhältnis der betreffenden Gesamtmengen. So sind bei einer Aufzeichnungsschicht, welche beispielsweise überwiegend Gold enthält, die Golduntermengen erheblich größer als die Untermengen der übrigen Metalle.

Das Beschichten selbst erfolgt entweder durch sogenanntes "dynamisches Sputtern" oder durch sogenanntes "statisches Sputtern" im Hochvakuum.

Beim dynamischen Sputtern wird der zu beschichtende Träger mittels einer mechanischen Drehvorrichtung periodisch an zwei oder mehr nebeneinander angeordneten Metallquellen - sogenannten "sputter targets" - vorbeigefahren. Die abgeschiedene Menge der einzelnen Metalle ergibt sich somit aus der Geschwindigkeit, mit welcher einer Träger an den sputter targets vorbeigezogen wird, und aus der Abscheiderate der einzelnen Metalle.

Beim statischen Sputtern befindet sich der Träger stationär vor einem sputter target und wird nach einer bestimmten Verweilzeit, welche sich nach der abzuscheidenden Metallmenge richtet, zur nächsten Metallquelle gebracht und vor dieser fixiert.

Dem beim Sputtern verwendeten Prozeßgas Argon können weiter geeignete Gase, wie Wasserstoff, Stickstoff, Helium, Neon, Krypton oder Xenon, in geeigneten Mengen zugemischt werden.

Das separate Abscheiden von Gold und mindestens einem der genannten weiteren Metalle in alternierender Folge wird mindestens zweimal durchgeführt. Dabei ist es von Vorteil, diesen Vorgang mindestens fünfmal durchzuführen. Ein besonders vorteilhaftes Eigenschaftsprofil läßt sich durch mindestens achtmaliges Durchführen einstellen. Hinsichtlich der erzielbaren besonders vorteilhaften Eigenschaften der Aufzeichnungsschicht und des damit verbundenen Herstellaufwandes stellt das 10- bis 15mal durchzuführende separate Abscheiden von Gold und von mindestens einem der genannten Metalle ein Optimum dar. 16-, 17-, 18- oder 19maliges Durchführen wird seltener angewendet, weil die dabei zu erzielende weitere Steigerung des an sich schon besonders vorteilhaften Eigenschaftprofils den höheren Herstellaufwand nur in Ausnahmefällen lohnt. 20 oder mehr Durchführungen werden nur bei ganz speziellen Fällen angewendet.

Die besonderen vorteilhaften Eigenschaften und die äußere Gestalt der Aufzeichnungsschichten hängen mit dieser besonderen Herstellweise unmittelbar zusammen und lassen sich nicht oder nur in sehr eingeschränktem Maße durch andere Herstellmethoden erzielen. Bestenfalls erhält man durch die andere Methoden Aufzeichnungsschichten, in denen lediglich einzelne Merkmale - nicht aber deren erfindungsgemäße Kombination - verwirklicht sind. Diese isolierten Einzelmerkmale sind überdies weder zuverlässig zu reproduzieren noch können sie optimal aufeinander abgestimmt werden. Es bleibt vorerst offen, welche Effekte bei der besonderen Herstellweise letztlich die erfindungsgemäßen Merkmale und die äußere Gestalt der erfindungsgemäßen Aufzeichnungsschichten hervorrufen. Entscheidend ist, daß nach der besonderen Herstellweise die gewünschten Aufzeichnungsschichten exakt reproduziert werden können.

Die erfindungsgemäßen Aufzeichnungsmaterialien enthalten einen üblichen und bekannten dimensionsstabilen Träger aus einem lichtdurchlässigen Material wie Glas, Polymethylmethacrylat, Polycarbonat oder Polyethylenterephthalat oder aus einem lichtundurchlässigen Material wie Aluminium. Der Träger kann Oberflächenstrukturen wie Spurrillen aufweisen. Er kann die Form eines Bandes, einer quadratischen oder rechteckigen Platte oder einer runden Scheibe haben, wobei die für laseroptische Datenplatten oder "disks" üblichen und bekannten optischen klaren Scheiben eines Durchmessers von 90 oder 130 mm bevorzugt werden.

Darüber hinaus können die erfindungsgemäßen Aufzeichnungsmaterialien weitere Schichten enthalten. Hierfür kommen Interferenzfilme oder Abstandshalterschichten ("Spacer") aus Polytetrafluorethylen, Polyethylenterephthalat, Polycarbonat, Polysiloxan oder aus den Oxiden, Carbiden oder Nitriden des Siliziums, Aluminiums oder des Titans oder aus Graphit in Betracht. Diese Interferenzfilme oder Abstandshalterschichten sind im allgemeinen zwischen dem Träger und der Aufzeichnungsschicht angeordnet.

Methodisch weist die Herstellung der gegebenenfalls vorhandenen zusätzlichen Schichten keine Besonderheiten auf, sondern kann durch die üblichen und bekannten Techniken der Herstellung dünner Schichten und Filme erfolgen.

Den Aufzeichnungsschichten der erfindungsgemäßen Aufzeichnungsmaterialien können außerdem noch optisch klare Schutzschichten aufliegen, welche verhindern, daß Schmutzpartikel oder Kratzer im Laserfokus zu liegen kommen. Im allgemeinen werden hierfür übliche und bekannte Polymerisate oder SiliÄziumdioxid verwendet.

Zwei erfindungsgemäße Aufzeichnungsmaterialien können außerdem paarweise so miteinander verbunden werden, daß ihre Aufzeichnungsschichten einander parallel zugekehrt sind und ein gewisser Abstand zwischen ihnen herrscht. Dieser Abstand kann in üblicher und bekannter Weise mit Hilfe von Abstandshaltern, wie Stegen oder kleinen Säulen, eingestellt werden. Selbstverständlich sind in diesem Falle die Träger der beiden Aufzeichnungsmaterialien optisch klar. Ein einzelnes erfindungsgemäßes Aufzeichnungsmaterial kann aber auch zwei Aufzeichnungsschichten auf den einander gegenüberliegenden Seiten des Trägers aufweisen.

Die erfindungsgemäßen Aufzeichnungsmaterialien können in bekannter Weise mittels eines Schreiblaserstrahls mit analogen oder digitalen Daten beschrieben werden. Im allgemeinen weisen hierfür geeignete Laser bei der Schreibwellenlänge $\lambda$ eine Strahlleistung von 1 bis 20 mW auf. Der Fokusdurchmesser des Schreiblaserstrahls ist im allgemeinen kleiner als $1\mu$m. Im allgemeinen beträgt die Impulsdauer bei der Bestrahlung mit einem impulsmodulierten Laserstrahl 10 bis 1000 ns. Vorteilhafterweise verwendet man zum Einschreiben einen Laserstrahl vom Licht der Wellenlänge $\lambda$ von 200 bis 1200 nm. Vorteilhaft sind Wellenlängen $\lambda$ von 400 bis 1000 nm.

Beim Schreibvorgang wird der Laserstrahl in relativer Bewegung über das Aufzeichnungsmaterial hinweg geführt und trifft dabei senkrecht auf dieses auf, wobei er auf die Aufzeichnungsschicht fokussiert ist. An der Auftreffstelle wird die Aufzeichnungsschicht lokal erhitzt, und es entstehen thermisch veränderte Bereiche, welche im Falle der erfindungsgemäßen Aufzeichnungsmaterialien bei der Verwendung von impulsmodulierten Laserstrahlen die Form flacher Erhebungen mit runder oder ovaler Grundfläche und glatter Oberfläche haben. Der Durchmesser der Grundfläche dieser Erhebungen liegt zwischen 100 und 2000 nm. Beim Einschreiben mit einem analog modulierten Dauerstrich-Laser können diese Erhebungen beliebig geformte Grundflächen haben.

In diesen thermisch veränderten Bereichen ist die Reflektivität der Aufzeichnungsschicht gegenüber den unbeschriebenen Bereichen stark erhöht, wodurch ein starker optischer Kontrast erzielt wird.

Das Einschreiben der Daten in die Aufzeichnungsschicht kann von der dem Träger abgewandten Seite der Schicht her oder durch einen optisch klaren Träger hindurch erfolgen. Von Vorteil ist das Einschreiben der Daten von der dem Träger abgewandten Seite her.

Die eingeschriebenen Daten werden in bekannter Weise mit Hilfe eines Leselaserstrahls gelesen. Die Strahlleistung des Leselasers bei der Lesewellenlänge $\lambda'$ liegt unterhalb der Schwellenleistung, ab der ein Beschreiben möglich wird. Im allgemeinen liegt die Strahlleistung bei 0,1 bis 2 mW. Vorteilhafterweise verwendet man Laserlicht der Wellenlänge $\lambda'$ von 200 bis 1200 nm. Besonders vorteilhaft sind Wellenlängen $\lambda'$ von 400 bis 1000 nm, insbesondere 630 bis 900 nm. Trifft der Leselaserstrahl beim Überstreichen der Aufzeichnungsschicht auf einen thermisch veränderten Bereich, so ändern sich die Eigenschaften des vom Aufzeichnungsmaterial reflektierten Lichts, was mit Hilfe geeigneter Detektoren nachgewiesen wird.

Dabei kann das Lesen der Daten in der Aufzeichnungsschicht von der dem Träger abgewandten Seite der Schicht her oder durch einen optisch klaren Träger hindurch erfolgen. Von Vorteil ist das Lesen der Daten von der dem Träger abgewandten Seite der Aufzeichnungsschicht her.

Für dieses Schreib- und Leseverfahren ist es außerdem von ganz besonderem Vorteil, Schreib- und Leselaser zu verwenden, welche Laserstrahlung im infraroten Wellenlängenbereich von 630 bis 900 nm ausstrahlen. Dabei ist es außerdem von Vorteil, wenn die Schreibwellenlänge $\lambda$ mit der Lesewellenlänge $\lambda'$ identisch ist oder sich nur wenig von ihr unterscheidet. Licht dieser Wellenlängen wird von üblichen und bekannten Halbleiter-Lasern geliefert, welche in den Schreib- und Leseköpfen der üblichen und bekannten laseroptischen Plattenlaufwerke vorhanden sind.

Die erfindungsgemäßen Aufzeichnungsmaterialien werden somit in bevorzugter Verfahrensweise mit impulsmoduliertem Laserlicht der Wellenlänge $\lambda$ von 630 bis 900, insbesondere 740 bis 850 nm beschrieben. Danach werden die beschriebenen Aufzeichnungsmaterialien in bevorzugter Verfahrensweise mit Laserlicht der Wellenlänge $\lambda'$ von 630 bis 900, insbesondere 740 bis 850 nm gelesen, wobei man das von der Aufzeichnungsschicht reflektierte Licht erfaßt. Haben die erfindungsgemäßen, flächenförmigen, mehrschichtigen Aufzeichnungsmaterialien die Form von Datenplatten oder "disks", so ist es besonders vorteilhaft, das Schreiben und Lesen der Daten mit Hilfe der üblichen und bekannten Plattenlaufwerke durchzuführen.

Die erfindungsgemäßen Aufzeichnungsmaterialien weisen besondere Vorteile gegenüber dem Stand der Technik auf.

So sind ihre unbeschriebenen Aufzeichnungsschichten außerordentlich stabil, so daß sie sich auch nach langer Lagerung bei hoher Temperatur und Luftfeuchtigkeit nicht verändern und sich noch immer hervorragend für das Schreiben und Lesen von Daten eignen. Gleiches gilt für die beschriebenen Aufzeichnungsschichten; hier tritt auch bei sehr langer Lagerung unter extremen Bedingungen kein Informationsverlust ein. Auch ändern sich die thermisch veränderten Bereiche nachträglich nicht in ihrer Form oder Reflektivität, sondern sind völlig stabil. Die erfindungsgemäßen Aufzeichnungsmaterialien eignen sich daher hervorragend zur Archivierung von Daten, die längere Zeit aufbewahrt werden müssen und keinesfalls verloren gehen dürfen. Überdies sind die Aufzeichnungsmaterialien mechanisch außerordentlich stabil, so daß die Gefahr eines Informationsverlustes durch unsachgemäße Handhabung sehr gering ist. Darüber hinaus sind die Aufzeichnungsschichten zäh, kratzfest und weitgehend unempfindlich gegenüber aggresiven Chemikalien wie etwa Säuredämpfen, welche beispielsweise beim Brand elektrischer Anlagen entstehen können.

Die Aufzeichnungsschichten der erfindungsgemäßen Aufzeichnungsmaterialien weisen eine gute Grundreflektivität auf, welche das präzise Ansprechen der Spurlagenservo- und -Autofokusiereinrichtung zuverlässig gewährleistet. Die Aufzeichnungsschichten sind außerordentlich empfindlich, so daß sie mit vergleichsweise geringer Lichtleistung beschrieben werden können. Im Falle der laseroptischen Datenplatten bedeutet dies, daß sie mit vergleichsweise geringer Lichtleistung bei hohen Umdrehungszahlen beschrieben werden können. Wegen ihrer besonders hohen Bit-Dichte und der hohen Empfindlichkeit eignen sich die Aufzeichnungsmaterialien hervorragend für das Aufzeichnen von Videosignalen.

Die thermisch veränderten Bereiche in den Aufzeichnungsschichten der erfindungsgemäßen Aufzeichnungsmaterialien haben eine erheblich höhere Reflektivität als die unbeschriebenen Bereiche. Dies bewirkt einen besonders hohen optischen Kontrast und ein hohes Signal-Rausch-Verhältnis. Wegen der sauber ausgeprägten, gleichmäßigen Form der Erhebungen weisen die Signale keine Verzerrungen auf. Überdies können die eingeschriebenen Daten unmittelbar nach dem Schreiben gelesen werden.

Eine nach der erfindungsgemäßen Verfahrensweise hergestellte Aufzeichnungsschicht eines erfindungsgemäßen Aufzeichnungsmaterials ist über ihre gesamte Fläche hinweg in ihrem Eigenschaftsprofil außerordentlich homogen. Falls stellenweise Abweichungen hiervon auftreten, dann sind sie so gering, daß sie sich bei der Datenaufzeichnung und -wiedergabe nicht nachteilig bemerkbar machen. Gleiches gilt für die Aufzeichnungsschichten mehrerer in gleicher Weise hergestellter erfindungsgemäßer Aufzeichnungsmaterialien; auch diese unterscheiden sich nicht oder nur unmerklich voneinander.

Beispiele

Bei den folgenden Beispielen und Vergleichsversuchen wurde die mittlere Schichtdicke $\overline{d}$,
- die mittlere Dicke $\overline{d}_{min}$ von 10 der dünnsten Stellen einer Aufzeichnungsschicht,
- die mittlere Dicke $\overline{d}_{max}$ von 10 der dicksten Stelle einer Aufzeichnungsschicht,
- die mittlere Korngröße und
- der Gehalt an unlegiertem, als separate Phase vorliegendem Gold
an den rasterelektronenmikroskopischen Aufnahmen der Aufzeichnungsschichten in bekannter Weise bestimmt. Die Reflektivität der Aufzeichnungsschichten der Aufzeichnungsmaterialien wurde von der den Trägern abgewandten Seite der Aufzeichnungsschichten her mittels Licht der Wellenlänge λ = 780 nm in bekannter Weise gemessen. Dabei wurde bei jeder Aufzeichnungsschicht die Reflektivität an 10 verschiedenen Kreisbahnen gemessen und aus den erhaltenen Mittelwerten der Reflektivität jeder Kreisbahn der Gesamtmittelwert gebildet.

Als Maß der Empfindlichkeit der Aufzeichnungsschichten wurde die Schreibschwellenleistung des Laserlichts in mW angenommen. Ab dieser Schreibschwellenleistung werden beim Bestrahlen "spots" in den Aufzeichnungsschichten erzeugt. Diese Schreibschwellenleistung wurde in bekannter Weise mit Hilfe eines in seiner Lichtleistung stufenweise veränderbaren, impulsmodulierten Lasers (Wellenlänge λ des emittierten Lichts: 830 nm; Pulsdauer: 500 ns) ermittelt. Bei den Messungen wurde der vom Laser emittierte Strahl stets mit der relativen Geschwindigkeit von 4 m/s über die Seite der Aufzeichungsschicht hinweggeführt, welche dem Träger abgewandt war.

Das Signal-Rausch-Verhältnis wurde in bekannter Weise an Aufzeichnungsmaterialien ermittelt, welche mit Hilfe eines impulsmodulierten Lasers (Wellenlänge λ des emittierten Lichts: 830 nm; Pulsdauer 500 ns; Lichtleistung: 6 mW) beschrieben worden waren. Hierzu wurden die Aufzeichnungsmaterialien mit Hilfe eines Dauerstrich-Lasers (Wellenlänge λ des emittierten Lichts: 780 nm; Lichtleistung: 0,5 mW) von der dem Träger abgewandten Seite her gelesen. Der emittierte Leselaserstrahl wurde dabei stets mit der relativen Geschwindigkeit von 4 m/s über die Aufzeichnungsschichten hinweggeführt. Dabei wurde stets das von den Aufzeichnungsmaterialien reflektierte Licht erfaßt und analysiert.

Beispiele 1 bis 10

Herstellung und Eigenschaften erfindungsgemäßer laseroptischer Datenplatten

Für die Herstellung der laseroptischen Datenplatten wurden die bekannten, optisch klaren, 1,2 mm dicken und 130 mm durchmessenden runden Scheiben aus Polycarbonat verwendet.

Auf diese Scheiben wurden durch an sich bekanntes dynamisches oder statisches Sputtern im Hochvakuum Aufzeichnungsschichten aufgebracht, welche aus Gold und aus Platin, Osmium, Iridium oder Palladium bestanden.

Bei allen Beispielen wurde zunächst eine gewisse Untermenge von Gold und anschließend eine gewisse Untermenge von einem der anderen Metalle auf die Träger abgeschieden, wonach man diese beiden Beschichtungsschritte unter Verwendung der jeweils gleichen Gold- und Metalluntermengen wiederholte. Die Golduntermenge und die Untermenge von einem der anderen Metalle wurden über die Metallabscheidungsrate und die Beschichtungszeit während der betreffenden einzelnen separaten Beschichtungsschritte eingestellt. In dieser Weise wurde gewährleistet, daß eine einzelne Aufzeichnungsschicht stets aus unter sich in etwa gleich großen Portionen von Gold und aus unter sich in etwa gleichgroßen Portionen eines der anderen Metalle aufgebaut wurde.

Die Tabelle 1 gibt Auskunft über die Zusammensetzung der Aufzeichnungsschichten, darüber, wie oft und mit jeweils welchen Untermengen bei ihrer Herstellung das separate Beschichten mit Gold und mit einem der anderen Metalle in alternierender Folge durchgeführt wurde, und über die daraus jeweils resultierende äußere Gestalt der Aufzeichnungsschichten.

Die in dieser Weise erhaltenen laseroptischen Datenplatten 1 bis 10, Tabelle 1, wurden auf einem üblichen und bekannten Plattenlaufwerk bei einer relativen Umlaufgeschwindigkeit von 4 m/s beschrieben und gelesen. Das Plattenlaufwerk enthielt einen laseroptischen Schreib- und Lesekopf, welcher

- einen impulsmodulierten Halbleiterlaser (Schreiblaser; Wellenlänge λ des emittierten Lichts: 830 nm; Impulsdauer: 500 ns; Lichtleistung: 6 mW) und
- einen Halbleiterlaser, welcher Licht kontinuierlich emittierte (Leselaser; Dauerstrich-Laser; Wellenlänge λ des emittierten Lichts: 780 nm; Lichtleistung: 0,5 mW)

aufwies. Die beschrieben Bereiche oder "spots" der Datenplatten wiesen eine deutlich höhere Reflektivität auf als die unbeschriebenen Bereiche. Die "spots" waren allesamt gleichmäßig ausgebildet und von elliptischer Grundfläche.

Unmittelbar nach dem Schreiben wurden die Datenplatten gelesen (erstes Lesen), wobei man starke, unverzerrte Signale erhielt. Das Signal-Rausch-Verhältnis wurde in üblicher Weise mit einem Spektrumanalysator bei einer Auflösungsbandbreite von 30 kHz ermittelt und lag in allen Fällen über 45 dB.

Die beschriebenen Datenplatten wurden darauf 6 Wochen lang am Tageslicht bei einer Temperatur von 60°C in einer feuchten Atmosphäre (relative Luftfeuchte: 90 %) gelagert und danach erneut gelesen (zweites Lesen). Dabei trat kein Informationsverlust ein, und das Signal-Rausch-Verhältnis war nur unwesentlich verringert.

Die Ergebnisse der Versuche finden sich in der Tabelle 2. Sie belegen die außerordentlich vorteilhaften Eigenschaften der erfindungsgemäßen laseroptischen Datenplatten.

Tabelle 1: Herstellung, Zusammensetzung und äußere Gestalt der erfindungsgemäßen laseroptischen Datenplatten

| Bei-spiel | Zusammensetzung der Aufzeichnungsschicht: Gew.% | | | | | separates Beschichten mit Pt, Os, Ir oder Pd in alternierender Folge: Sputterbedingungen und Anzahl der Durchführung | | Au sowie Untermengen pro Beschichtungsschritt in mg | | Äußere Gestalt der Aufzeichnungsschicht | | | |
|---|---|---|---|---|---|---|---|---|---|---|---|---|---|
| | | | | | | | | | | $\bar{d}$ | $\bar{d}_{min}$ | $\bar{d}_{max}$ | mittlerer Korndurch-messer |
| Nr. | Au | Pt | Os | Ir | Pd | dynamisch | statisch | Au | Metall | nm | nm | nm | nm |
| 1 | 30 | 70 | - | - | - | 10 | - | 0,51 | 1,2 | 61,5 | 1 | 122 | 120 |
| 2 | 50 | 50 | - | - | - | 10 | - | 0,73 | 0,73 | 54,2 | 1,5 | 107 | 100 |
| 3 | 70 | 30 | - | - | - | 10 | - | 1,03 | 0,45 | 55,7 | 0,5 | 111 | 110 |
| 4 | 50 | 50 | - | - | - | - | 10 | 0,76 | 0,76 | 56 | 2 | 110 | 105 |
| 5 | 70 | 30 | - | - | - | - | 5 | 2,9 | 1,22 | 76,8 | 1,7 | 152 | 140 |
| 6 | 70 | 30 | - | - | - | - | 15 | 0,64 | 0,28 | 51,5 | 3 | 100 | 90 |
| 7 | 70 | 30 | - | - | - | - | 20 | 0,43 | 0,2 | 45,5 | 1 | 90 | 85 |
| 8 | 70 | - | 30 | - | - | 11 | - | 0,9 | 0,38 | 51,4 | 0,8 | 102 | 100 |
| 9 | 75 | - | - | 25 | - | 12 | - | 0,96 | 0,32 | 57,3 | 0,7 | 114 | 110 |
| 10 | 75 | - | - | - | 25 | - | 10 | 1,05 | 0,35 | 61 | 2 | 120 | 115 |

EP 0 293 741 B1

Tabelle 2: Anwendungstechnische Eigenschaften der erfindungsgemäßen laseroptischen Datenplatten

| Beispiel Nr. | Grund-reflektivität % | Reflektivität in den "spots" % | Schreibempfindlichkeit; Schwellenleistung mWatt | Signal-Rausch-Verhältnis 1. Lesen dB | 2. Lesen dB | Bemerkungen |
|---|---|---|---|---|---|---|
| 1 | 13 | 26 | 3 | 49 | 48 | kein Informationsverlust bei der Lagerung |
| 2 | 11 | 25 | 3,2 | 50 | 50 | kein Informationsverlust bei der Lagerung |
| 3 | 12 | 27 | 2,9 | 52 | 51 | kein Informationsverlust bei der Lagerung |
| 4 | 12 | 24 | 3,1 | 51 | 52 | kein Informationsverlust bei der Lagerung |
| 5 | 12 | 22 | 3,7 | 57 | 57 | kein Informationsverlust bei der Lagerung |
| 6 | 17 | 28 | 2,8 | 52 | 51 | kein Informationsverlust bei der Lagerung |
| 7 | 18 | 29 | 2,7 | 55 | 54 | kein Informationsverlust bei der Lagerung |
| 8 | 15 | 31 | 3,3 | 53 | 52 | kein Informationsverlust bei der Lagerung |
| 9 | 17 | 30 | 3 | 51 | 51 | kein Informationsverlust bei der Lagerung |
| 10 | 16 | 29 | 3,5 | 52 | 51 | kein Informationsverlust bei der Lagerung |

**Patentansprüche**

1. Flächenförmiges, laseroptisches Aufzeichnungsmaterial mit einem dimensionsstabilen Träger und einer dünnen, thermisch veränderbaren Aufzeichnungsschicht, welche aus Gold sowie mindestens aus einem der Metalle Ruthenium, Rhodium, Palladium, Silber, Kupfer, Osmium, Iridium und Platin besteht und die

10

unter ihr liegende Oberfläche vollständig bedeckt,
dadurch gekennzeichnet, daß

a) die Aufzeichnungsschicht außerdem noch aus Rhenium bestehen kann und
b) bezogen auf ihre Gesamtmenge 15 bis 85 Gew.% Gold enthält, welches überwiegend unlegiert als separate Phase vorliegt,
c) eine Oberflächenkörnung mit einem mittleren Korndurchmesser von 10 bis 200 nm aufweist,
d) eine mittlere Schichtdicke $<d>$ von 5 bis 300nm hat, wobei $<d>$ definiert ist als

$$<d> = (<d_{min}> + <d_{max}>)/2 ,$$

worin $<d_{min}>$ die mittlere Dicke von 10 der dünnsten Stellen und $<d_{max}>$ die mittlere Dicke von 10 der stärksten Stellen der Aufzeichnungsschicht bedeutet,
und
e) durch mindestens zweimal durchzuführendes, separates Beschichten der Oberfläche des Trägers oder der Oberfläche einer dem Träger aufliegenden Schicht mit Gold und mit mindestens einem der anderen genannten Metalle in alternierender Folge hergestellt ist.

2. Aufzeichnungsmaterial nach Anspruch 1, dadurch gekennzeichnet, daß bei der Herstellung seiner Aufzeichnungsschicht während der einzelnen separaten Beschichtungsschritte jeweils in etwa gleiche Untermengen von Gold und jeweils in etwa gleiche Untermengen von mindestens einem der anderen genannten Metalle abzuscheiden sind.

3. Aufzeichnungsmaterial nach Anspruch 1 oder 2, dadurch gekennzeichnet, daß die Aufzeichnungsschicht, bezogen auf ihre Gesamtmenge, 30 bis 75 Gew.% Gold enthält, eine Oberflächenkörnung mit einem mittleren Korndurchmesser von 80 bis 150 nm aufweist, eine mittlere Schichtdicke $\overline{d}$ von 20 bis 150 nm hat und durch mindestens fünfmal durchzuführendes, separates Beschichten mit Gold und mit Platin, Osmium, Iridium oder Palladium in alternierender Folge hergestellt ist.

4. Aufzeichnungsmaterial nach einem der Ansprüche 1 bis 3, dadurch gekennzeichnet, daß die Aufzeichnungsschicht durch mindestens achtmal durchzuführendes, separates Beschichten mit Gold und mit Platin in alternierender Folge hergestellt ist.

5. Verfahren zur Herstellung eines flächenförmigen, laseroptischen Aufzeichnungsmaterials durch Beschichten eines dimensionsstabilen Trägers mit einer dünnen, thermisch veränderbaren Aufzeichnungsschicht, welche aus Gold sowie mindestens aus einem der Metalle Ruthenium, Rhodium, Palladium, Silber, Kupfer, Osmium, Iridium und Platin besteht und die unter ihr liegende Oberfläche vollständig bedeckt,
dadurch gekennzeichnet, daß
die Aufzeichnungsschicht, die

a) außerdem noch aus Rhenium bestehen kann und
b) bezogen auf ihre Gesamtmenge 15 bis 85 Gew.% Gold enthält, welches überwiegend unlegiert als separate Phase vorliegt,
c) eine Oberflächenkörnung mit einem mittleren Korndurchmesser von 10 bis 200 nm aufweist,
d) eine mittlere Schichtdicke $<d>$ von 5 bis 300nm hat, wobei $<d>$ definiert ist als

$$<d> = (<d_{min}> + <d_{max}>)/2 ,$$

worin $<d_{min}>$ die mittlere Dicke von 10 der dünnsten Stellen und $<d_{max}>$ die mittlere Dicke von 10 der stärksten Stellen der Aufzeichnungsschicht bedeutet,
durch mindestens zweimal durchzuführendes, separates Beschichten der Oberfläche des Trägers oder der Oberfläche einer dem Träger aufliegenden Schicht mit Gold und mit mindestens einem der anderen genannten Metalle in alternierender Folge hergestellt wird.

6. Verfahren nach Anspruch 5, dadurch gekennzeichnet, daß man während der einzelnen separaten Beschichtungsschritte jeweils in etwa gleiche Untermengen von Gold und jeweils in etwa gleiche Untermengen von mindestens einem der genannten Metalle abscheidet.

7. Verfahren nach Anspruch 5 oder 6, dadurch gekennzeichnet, daß man das separate Beschichten mit Gold und mit einem der Metalle Platin, Osmium, Iridium oder Palladium in alternierender Folge mindestens fünfmal durchführt.

8. Verfahren nach Anspruch 7, dadurch gekennzeichnet, daß man das separate Beschichten mit Gold und mit Platin in alternierender Folge mindestens achtmal durchführt.

**Claims**

1. A sheet-like, laser-optical recording material which has a dimensionally stable base and a thin, thermally alterable recording layer consisting of gold and one or more of the metals ruthenium, rhodium, palladium, silver, copper, osmium, iridium and platinum and completely covering the layer underneath it, wherein
   a) the recording layer may also consist of rhenium and
   b) contains from 15 to 85% by weight, based on the total amount of the said layer, of gold, which is predominantly present in unalloyed form as a separate phase,
   c) has a surface grain possessing a mean particle diameter of from 10 to 200 nm,
   d) has a mean layer thickness <d> of from 5 to 300 nm, <d> being defined as

   $$<d> = (<d_{min}> + <d_{max}>)/2,$$

   where $<d_{min}>$ is the mean thickness of 10 of the thinnest areas and $<d_{max}>$ is the mean thickness of 10 of the thickest areas of the recording layer,
   and
   e) is produced by coating the surface of the base, or the surface of a layer present on the base, alternately with gold and with one or more of the other metals mentioned, the said coating procedure being carried out by two or more separate procedures.

2. A recording material as claimed in claim 1, wherein, in the production of its recording layer, roughly the same partial amounts of gold and roughly the same partial amounts of one or more of the stated metals are to the deposited during each of the individual separate coating steps.

3. A recording material as claimed in claim 1 or 2, wherein the recording layer contains from 30 to 75% by weight, based on its total amount, of gold, has a surface grain with a mean particle diameter of from 80 to 150 nm, possesses a mean layer thickness $\overline{d}$ of from 20 to 150 nm and is produced by separate coating alternately with gold and with platinum, osmium, iridium or palladium, the said coating procedure being carried out five or more times.

4. A recording material as claimed in any of claims 1 to 3, wherein the recording layer is produced by separate coating alternately with gold and with platinum, the said coating procedure being carried out eight or more times.

5. A process for the production of a sheet-like, laser-optical recording material by coating a dimensionally stable base having a thin, thermally alterable recording layer which consists of gold and one or more of the metals ruthenium, rhodium, palladium, silver, copper, osmium, iridium and platinum and completely covers the layer underneath it, wherein the recording layer which
   a) may also consist of rhenium and
   b) contains from 15 to 85% by weight, based on the total amount of said layer, of gold, which is predominantly present in unalloyed form as a separate phase,
   c) has a surface grain possessing a mean particle diameter of from 10 to 200 nm,
   d) has a mean layer thickness <d> of from 5 to 300 nm, <d> being defined as

   $$<d> = (<d_{min}> + <d_{max}>)/2,$$

   where $<d_{min}>$ is the mean thickness of 10 of the thinnest areas and $<d_{max}>$ is the mean thickness of 10 of the thickest areas of the recording layer,
   is produced by separately coating the surface of the base or the surface of a layer present on the base, alternately with gold and with one or more of the other metals mentioned, the said coating procedure being carried out two or more times.

6. A process as claimed in claim 5, wherein about the same partial amounts of gold and about the same partial amounts of one or more of the stated metals are deposited during each of the individual separate coating steps.

7. A process as claimed in claim 5 or 6, wherein separate coating alternately with gold and with one of the metals platinum, osmium, iridium or palladium is carried out five or more times.

8. A process as claimed in claim 7, wherein separate coating alternately with gold and with platinum is carried out eight or more times.

**Revendications**

1. Support d'enregistrement optique laser plat comportant un substrat de dimensions stables et une couche mince d'enregistrement modifiable thermiquement qui est constituée d'or et d'au moins un des métaux ruthénium, rhodium, palladium, argent, cuivre, osmium, iridium et platine et couvre entièrement la surface située sous elle,
caractérisé par le fait que
a) la couche d'enregistrement peut en outre encore être constituée de rhénium et
b) contient de 15 à 85 % en poids d'or qui se présente en majeure partie sous forme non alliée et en phase séparée,
c) présente une granulation superficielle avec un diamètre moyen des grains de 10 à 200 nm,
d) a une épaisseur moyenne $<d>$ de 5 à 300 nm, $<d>$ étant défini par la formule

$$<d> = (<d_{min}> + <d_{max}>)/2,$$

dans laquelle $<d_{min}>$ est l'épaisseur moyenne de 10 des endroits les plus minces et $<d_{max}>$ l'épaisseur moyenne de 10 des endroits les plus épais de la couche d'enregistrement, et
e) est produite par revêtement séparé, exécuté au moins deux fois, de la surface du substrat, ou de la surface d'une couche reposant sur le substrat, en alternance, d'or et d'au moins un des autres métaux cités.

2. Support d'enregistrement selon la revendication 1, caractérisé par le fait que lors de la production de sa couche d'enregistrement, pendant les différentes étapes séparées de revêtement, sont déposées des quantités partielles à peu près égales d'or et des quantités partielles à peu près égales d'au moins un des autres métaux cités.

3. Support d'enregistrement selon l'une des revendications 1 et 2, caractérisé par le fait que la couche d'enregistrement contient de 30 à 75 % en poids d'or, présente une granulation superficielle avec un diamètre moyen des grains de 80 à 150 nm, a une épaisseur moyenne d de 20 à 150 nm et est produite par revêtement séparé, exécuté au moins cinq fois, en alternance, d'or et de platine, osmium, iridium ou palladium.

4. Support d'enregistrement selon l'une des revendications 1 à 3, caractérisé par le fait que la couche d'enregistrement est produite par revêtement séparé, exécuté au moins huit fois, en alternance, d'or et de platine.

5. Procédé de fabrication d'un support d'enregistrement optique laser plat par revêtement d'un substrat de dimensions stables d'une couche mince d'enregistrement modifiable thermiquement qui est constituée d'or et d'au moins un des métaux ruthénium, rhodium, palladium, argent, cuivre, osmium, iridium et platine et couvre entièrement la surface située sous elle,
caractérisé par le fait que la couche d'enregistrement, qui
a) peut en outre encore être constituée de rhénium et
b) contient de 15 à 85 % en poids d'or qui se présente en majeure partie sous forme non alliée et en phase séparée,
c) présente une granulation superficielle avec un diamètre moyen des grains de 10 à 200 nm,
d) a une épaisseur moyenne $<d>$ de 5 à 300 nm, $<d>$ étant défini par la formule

$$<d> = (<d_{min}> + <d_{max}>)/2,$$

13

dans laquelle $<d_{min}>$ est l'épaisseur moyenne de 10 des endroits les plus minces et $<d_{max}>$ l'épaisseur moyenne de 10 des endroits les plus épais de la couche d'enregistrement, est produite par revêtement séparé, exécuté au moins deux fois, de la surface du substrat, ou de la surface d'une couche reposant sur le substrat, en alternance, d'or et d'au moins un des autres métaux cités.

6. Procédé selon la revendication 5, caractérisé par le fait que, pendant les différents étapes séparées de revêtement, on dépose des quantités partielles à peu près égales d'or et des quantités partielles à peu près égales d'au moins un des métaux cités.

7. Procédé selon l'une des revendications 5 et 6, caractérisé par le fait qu'on exécute au moins cinq fois le revêtement séparé, en alternance, d'or et d'un des métaux platine, osmium, iridium et palladium.

8. Procédé selon la revendication 7, caractérisé par le fait qu'on exécute au moins huit fois le revêtement séparé, en alternance, d'or et de platine.